(19) Europäisches Patentamt
European Patent Office
Office européen des brevets

(11) **EP 3 594 547 A1**

(12) **EUROPEAN PATENT APPLICATION**
published in accordance with Art. 153(4) EPC

(43) Date of publication:
**15.01.2020 Bulletin 2020/03**

(21) Application number: **18764598.1**

(22) Date of filing: **05.03.2018**

(51) Int Cl.:
***F16L 11/08*** *(2006.01)*     ***B32B 1/08*** *(2006.01)*

(86) International application number:
**PCT/JP2018/008433**

(87) International publication number:
**WO 2018/164082 (13.09.2018 Gazette 2018/37)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **10.03.2017 JP 2017046760**

(71) Applicant: **Bridgestone Corporation
Tokyo 104-8340 (JP)**

(72) Inventors:
• **IKEHARA Kiyoshi
Tokyo 104-8340 (JP)**
• **SHIBATA Teppei
Tokyo 104-8340 (JP)**

(74) Representative: **Oxley, Robin John George
Marks & Clerk LLP
15 Fetter Lane
London EC4A 1BW (GB)**

(54) **HIGH PRESSURE HOSE**

(57)     There is provided a high pressure hose that is excellent in shock durability while using a steel cord as a reinforcing material. The high pressure hose 10 includes a structure formed by layering plural steel cord reinforced layers 11 formed by spirally winding a steel cord formed by twisting plural steel filaments, in which assuming that the direction of winding a steel cord in the $N^{th}$ ($N \geq 1$) steel cord reinforced layer and the direction of winding a steel cord in the $(N + 1)^{th}$ steel cord reinforced layer are different from each other, and a cross angle $\theta_{N-(N+1)}$ is an angle between an outermost layer steel filament in a hose radial direction outer side of the steel cord in the $N^{th}$ steel cord reinforced layer 11 and an outermost layer steel filament in a hose radial direction inner side of the steel cord in the $(N + 1)^{th}$ steel cord reinforced layer 11, a cross angle $\theta_{1-2}$ satisfies a relationship represented by the following Formula (1): $\theta_{1-2}<76°$ (1).

FIG. 1

AXIAL DIRECTION OF HOSE

EP 3 594 547 A1

**Description**

TECHNICAL FIELD

The present invention relates to high pressure hoses, and specifically relates to a high pressure hose excellent in shock durability.

BACKGROUND ART

A high pressure hose with flexibility used for a construction machine, a working machine, a power steering hose of an automobile, a measuring instrument and the like is generally provided with an inner rubber layer and a plurality of reinforcing layers disposed on the outer periphery thereof. As a reinforcing material for a high pressure hose including such reinforced layers, fibers such as steel filaments, nylon, polyester, or the like are commonly and, for example, in the case of a high pressure hose having a four-layer structure, winding is performed so that right-hand winding (hereinafter, also referred to as "Z-wound") and left-hand winding (hereinafter, also referred to as "S-wound") are alternated.
As a technology related to the improvement of such a high pressure hose, for example, Patent Document 1 proposes that the directions of winding steel filaments as reinforcing materials are disposed so that the directions of winding the inner and outer reinforcing materials are symmetrical with an intermediate layer interposed therebetween. Such a configuration enables the interlayer shear strain of the interior of a high pressure hose to be canceled in a case in which the high pressure hose is subject to bending deformation, thereby decreasing the strain of entire layers to improve durability against cyclic bending deformation.

RELATED ART DOCUMENT

PATENT DOCUMENT

Patent Document 1: JPH11-315969A

SUMMARY OF THE INVENTION

PROBLEMS TO BE SOLVED BY THE INVENTION

In such a case, the flexural rigidity of the steel filaments is proportional to the fourth power of a diameter, and therefore, a steel cord in which thinner steel filaments are twisted is more flexible in comparison at the same cross-sectional area. The thicker the steel filaments of 0.4 mm or more are, the less easily the strength per cross-sectional area is obtained, and therefore, twisting of steel filaments of 0.4 mm or less in diameter facilitates the obtainment of the strength to enable weight reduction. Thus, a steel cord in which thin steel filaments are twisted is used when a product requiring performance of flexibility and high strength, such as a tire, is reinforced with steel.
Conventionally, the achievement of both strength and flexibility, equivalent to those of a tire, has not been demanded in reinforcement of a high pressure hose, and therefore, a steel cord with the man-hour of twisting steel filaments has not commonly been used. For further imparting high strength and flexibility to a high pressure hose used at even higher pressure, however, a single steel filament has a limitation, and such a steel cord in which steel filaments are twisted, as being used for reinforcing a tire, can also be considered to be applied to the high pressure hose. However, a new problem has occurred that a high pressure hose using a steel cord, in which steel filaments are twisted, as a reinforcing material may result in insufficient improvement in shock durability.
Thus, an object of the present invention is to provide a high pressure hose that is excellent in shock durability while using, as a reinforcing material, a steel cord in which steel filaments are twisted.

MEANS FOR SOLVING THE PROBLEMS

As a result of intensive examination for solving the problems described above, the present inventors obtained the following findings. In other words, as a result of observing the fracture morphology of a high pressure hose in detail, it was found that dents considered to be caused by contact with steel filaments in another reinforced layer were scattered on the surfaces of steel filaments included in a steel cord as a reinforcing material, and the steel filaments were ruptured starting from the vicinities of the dents. As a result of further intensive examination based on such findings, the present inventors found that the problems described above can be solved by allowing the cross angle of steel filaments in a reinforced layer to satisfy a predetermined relationship, and the present invention was thus accomplished.
In other words, a high pressure hose of the present invention includes a structure formed by layering a plurality of steel cord reinforced layers formed by spirally winding a steel cord formed by twisting a plurality of steel filaments, wherein assuming that
a direction of winding a steel cord in an $N^{th}$ ($N \geq 1$) steel cord reinforced layer and a direction of winding a steel cord in an $(N + 1)^{th}$ steel cord reinforced layer are different from each other, and
a cross angle $\theta_{N-(N+1)}$ is an angle between an outermost layer steel filament in a hose radial direction inner side of the steel cord in the $N^{th}$ steel cord reinforced layer and an outermost layer steel filament in a hose radial direction inner side of the steel cord in the $(N + 1)^{th}$ steel cord reinforced layer,
a cross angle $\theta_{1-2}$ between a first steel cord reinforced layer and a second steel cord reinforced layer satisfies a relationship represented by the following Formula (1):

$$\theta_{1-2} < 76° \qquad (1).$$

In the high pressure hose of the present invention, it is preferable that a cross angle $\theta_{M-(M+1)}$ where $N = M$ ($M \geq 2$) in the cross angle $\theta_{N-(N+1)}$ satisfies a relationship represented by the following Formula (2):

$$\theta_{M-(M+1)} < 76° \qquad (2).$$

In addition, in the high pressure hose of the present invention, it is preferable that assuming that
G1 is a gap between a steel cord in an $L^{th}$ steel cord reinforced layer and a steel cord in an $(L + 1)^{th}$ steel cord reinforced layer, in which a cross angle $\theta_{L-(L+1)}$ where $N = L$ ($L \geq 2$) in the cross angle $\theta_{N-(N+1)}$ satisfies $\theta_{L-(L+1)} \geq 76°$, and
G2 is a gap between a steel cord in a $P^{th}$ steel cord reinforced layer and a steel cord in a $(P + 1)^{th}$ steel cord reinforced layer, in which a cross angle $\theta_{P-(P+1)}$ where $N = P$ ($P \geq 1$, and L and P are different) in the cross angle $\theta_{N-(N+1)}$ satisfies $\theta_{P-(P+1)} < 72°$,
a relationship represented by the following Formula (3):

$$G1 > G2 \times 1.5 \qquad (3)$$

is satisfied.
Further, in addition, in the high pressure hose of the present invention, it is preferable that the cross angle $\theta_{1-2}$ satisfies a relationship represented by the following Formula (4):

$$\theta_{1-2} < 64° \qquad (4).$$

In addition, in the high pressure hose of the present invention, it is preferable that a twisting angle of the steel filaments with respect to a central axis of the steel cord is 2.6° to 15°.
Herein, in a high pressure hose 10 of the present invention, steel cord reinforced layers 11 and intermediate rubber layers 12 are counted from the inner side in the hose radial direction. In addition, with regard to the outermost layer steel filament, for example, each steel filament included in a steel cord forms an outermost layer in a case in which the steel cord is a single twisted steel cord having a ($1 \times n$) structure, and a steel filament in an outermost layer sheath forms an outermost layer in the case of a layer twisted steel cord. Further, in the high pressure hose of the present invention, N, L, M, and P representing the numbers of reinforced layers, and n representing the twisting structure of a steel cord are optional integers.

EFFECTS OF THE INVENTION

In accordance with the present invention, there can be provided a high pressure hose that is excellent in shock durability while using, as a reinforcing material, a steel cord in which steel filaments are twisted.

BRIEF DESCRIPTION OF THE DRAWINGS

    [FIG. 1] FIG. 1 is a cross-sectional perspective view of a high pressure hose according to a preferred embodiment of the present invention.

[FIG. 2] FIG. 2 is an explanatory diagram illustrating an example of a relationship between directions of winding and twisting a steel cord in an $N^{th}$ layer and a steel cord in an $(N + 1)^{th}$ layer.

[FIG. 3] FIG. 3 is an explanatory diagram illustrating another example of a relationship between directions of winding and twisting a steel cord in the $N^{th}$ layer and a steel cord in the $(N + 1)^{th}$ layer.

MODE FOR CARRYING OUT THE INVENTION

A high pressure hose of the present invention will be described in detail below with reference to the drawings.

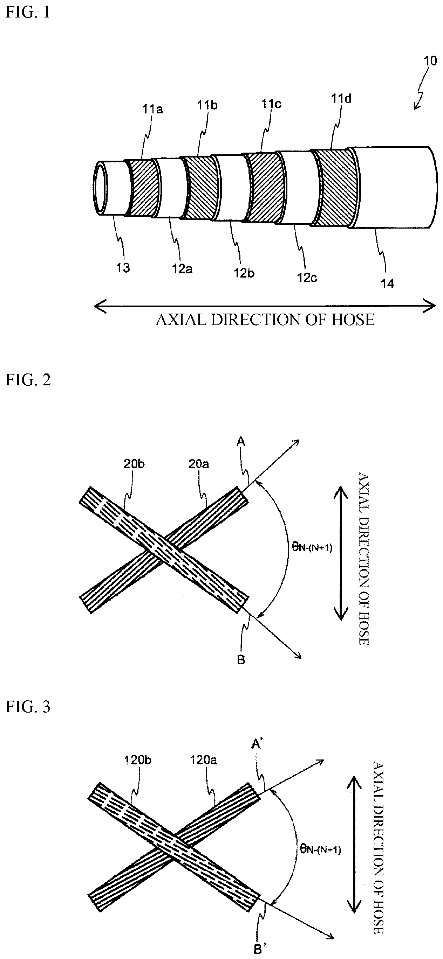

FIG. 1 is a cross-sectional perspective view of a high pressure hose according to a preferred embodiment of the present invention. A high pressure hose 10 of the present invention is a high pressure hose having a structure formed by layering plural steel cord reinforced layers (hereinafter, also simply referred to as "reinforced layer") 11 formed by spirally winding a steel cord formed by twisting plural steel filaments. In the high pressure hose of the present invention, the steel cord reinforced layers 11 may be layered via intermediate rubber layers 12 as illustrated in the drawing, and only the steel cord reinforced layers 11 may be consecutively layered. In addition to the structure in which the plural steel cord reinforced layers 11 are layered, for example, a reinforced layer using a code other than a steel cord, such as an organic fiber code, may be included. For example, an organic fiber reinforced layer with vinylon, nylon, polyethylene terephthalate (PET), or the like may be included more inwardly in the hose radial direction than the steel cord reinforced layers. In the high pressure hose illustrated in the drawing, an inner rubber layer 13 having a tubular shape is formed in an innermost layer, an outer rubber layer 14 having a tubular shape is formed in an outermost layer, and the four steel cord reinforced layers 11 and the three intermediate rubber layers 12 may be alternately arranged between the inner rubber layer 13 and the outer rubber layer 14.

In the high pressure hose 10 of the present invention, a direction of winding a steel cord in an $N^{th}$ reinforced layer 11 and a direction of winding a steel cord in an $(N + 1)^{th}$ reinforced layer 11 are different from each other. Although the four layers of which the first layer is S-wound, the second layer is Z-wound, the third layer is S-wound, and the fourth layer is Z-wound from the inner side are configured in the example illustrated in the drawing, four layers of which the first layer is Z-wound, the second layer is S-wound, the third layer is Z-wound, and the fourth layer is S-wound may be configured. In the high pressure hose 10 of the present invention, the number of reinforced layers 11 is not particularly limited, but may be five or more, and can be changed depending on a purpose of use, as appropriate. Ten or less layers are preferred, and eight or less layers are more preferred.

Next, FIG. 2 illustrates an explanatory diagram illustrating an example of a relationship between directions of winding and twisting a steel cord in the $N^{th}$ layer and a steel cord in the $(N + 1)^{th}$ layer, and FIG. 3 illustrates an explanatory diagram illustrating another example of a relationship between directions of winding and twisting a steel cord in the $N^{th}$ layer and a steel cord in the $(N + 1)^{th}$ layer. In FIG. 2, a steel cord 20a is Z-wound and S-twisted, and a steel cord 20b is S-wound and S-twisted, while, in FIG. 3, a steel cord 120a is Z-wound and Z-twisted, and a steel cord 120b is S-wound and Z-twisted. In addition, arrows A, A', B, and B' in the drawings indicate the directions of twisting steel filaments included in the respective steel cords. Herein, positions at which the steel filaments come into contact with each other are in the hose radial direction outer sides of the steel cords 20a, 120a in the $N^{th}$ layer, and in the hose radial direction inner sides of the steel cords 20b, 120b in the $(N + 1)^{th}$ layer. Thus, in FIGS. 2 and 3, the directions of twisting the steel filaments in in the hose radial direction the inner sides of the steel cords 20b, 120b in the $(N + 1)^{th}$ layer are indicated by dashed lines.

When the high pressure hose including the reinforced layers 11 formed by spirally winding the steel cords is pressurized, larger stress is applied to a steel cord in a layer located on an inner side. The intermediate rubber layers 12 are commonly disposed between the layered reinforced layers 11, and repeatedly applied pressure causes the intermediate rubber layers 12 to be fatigued, and then allows the steel cords in the layered reinforced layers 11 to come into contact with each other. Such contact points become the maximum portions of the repeated stress, fatigue rupture occurs starting from the vicinities thereof, and the high pressure hose 10 then becomes incapable of maintaining the pressure and becomes dead. In such a case, when the cross angle $\theta_{N-(N+1)}$ between the steel filaments included in the steel cords approaches 90°, i.e., when the steel cords becomes nearly perpendicular to each other as illustrated in FIG. 2, the stress concentrates on the narrow region (point contacts) in the contacts between the steel cords, and therefore, fatigue durability is deteriorated. In contrast, when the cross angle $\theta_{N-(N+1)}$ approaches 0°, i.e., the steel cords become nearly parallel to each other as illustrated in FIG. 3, the stress is dispersed (line contacts), and fatigue durability becomes favorable.

Accordingly, in a first reinforced layer 11a, to which the largest stress is applied, and a second reinforced layer 11b, the fatigue durability of the high pressure hose 10 can be improved by decreasing the cross angle $\theta_{1-2}$ between the steel filaments in the hose radial direction outer side of the steel cord in the first layer and the steel filaments in the hose radial direction inner side of the steel cord in the second layer.

A more specific explanation will be given by taking FIG. 2 as an example. With regard to the directions of winding the steel cords in the reinforced layers 11 of the high pressure hose 10, the first layer is Z-wound, the second layer is S-wound, the third layer is Z-wound, and the fourth layer is S-wound from the inner side, the angles of winding the steel cords in all the reinforced layers 11 are set at 54.7° with respect to the axis of the hose, all the steel cords are S-twisted, and the angles of twisting all the steel filaments with respect to the axes of the codes are set at 6.9°.

Herein, the steel cord in the first layer is Z-wound, and therefore wound in a direction of 54.7° to the right with respect to the axis of the hose, the twisting angle of the S-twisted steel filaments in the outer side coming in contact with the second layer is 6.9° to the left with respect to the axis of the steel cord, and therefore, the direction of twisting the steel filaments is at 54.7° - 6.9° = 47.8° to the right with respect to the axis of the hose. In contrast, with regard to the second layer, the steel cord is S-wound, and therefore wound in a direction of 54.7° to the left with respect to the axis of the hose, and the steel filaments in the inner side coming in contact with the first layer are at 6.9° to the right with respect to the axis of the steel cord and at 54.7 - 6.9 = 47.8° to the left with respect to the axis of the hose in the case of being S-twisted. As a result, the steel filaments in the first reinforced layer 11a and the steel filaments in the second reinforced layer 11b cross each other at a nearly perpendicular angle of 47.8 + 47.8 = 95.6°, i.e., 84.4°. In similar consideration, a cross angle $\theta_{2-3}$ between the steel filaments in the second and third layers is 56.8°, and a cross angle $\theta_{3-4}$ between the steel filaments in the third and fourth layers is 84.4°. Such a high pressure hose in which the cross angle $\theta_{1-2}$ between the reinforced layer 11a and the reinforced layer 11b is a nearly perpendicular angle is unfavorable in shock durability.

Thus, in the high pressure rubber hose of the present invention, assuming that a cross angle $\theta_{N-(N+1)}$ is an angle between outermost layer steel filaments in the hose radial direction of the steel cord in the $N^{th}$ reinforced layer 11 and outermost layer steel filaments in the hose radial direction inner side of the steel cord in the $(N + 1)^{th}$ reinforced layer 11, a cross angle $\theta_{1-2}$ between the first reinforced layer 11a and the second reinforced layer 11b is set at the following Formula (1):

$$\theta_{1-2} < 76° \qquad (1),$$

and preferably set at

$$\theta_{1-2} < 64° \qquad (4).$$

The lower limit of $\theta_{1-2}$ is preferably 30° or more.

In the high pressure hose 10 of the present invention, not only the relationship between the first reinforced layer 11a and the second reinforced layer 11b but also a relationship between an $M^{th}$ reinforced layer 11 of the second or later layer and an $(M + 1)^{th}$ reinforced layer 11 is preferably a similar relationship. In other words, it is preferable to decrease the cross angle $\theta$ between the steel filaments in the entire high pressure hose. Such a structure enables the fatigue durability of the high pressure hose 10 to be further improved.

Thus, in the high pressure hose 10 of the present invention, a cross angle $\theta_{M-(M+1)}$ between the outermost layer steel filaments in the hose radial direction outer side of the steel cord in the $M^{th}$ ($M \geq 2$) steel cord reinforced layer 11 and the outermost layer steel filaments in the hose radial direction inner side of the steel cord in the $(M + 1)^{th}$ steel cord reinforced layer 11 preferably satisfies a relationship represented by the following Formula (2):

$$\theta_{M-(M+1)} < 76° \qquad (2),$$

and more preferably satisfies a relationship represented by:

$$\theta_{M-(M+1)} < 72° \qquad (5).$$

The lower limit of $\theta_{M-(M+1)}$ is preferably 30° or more.

In addition, in the high pressure hose 10 of the present invention, the fatigue durability can be further improved by widening a gap between the steel cords between the reinforced layers 11. However, a simple widening of the gap between the steel cords between the reinforced layers 11 is unfavorable because of resulting in the larger diameter of the high pressure hose 10. Accordingly, in the high pressure hose 10 of the present invention, an increase in a gap between steel cords at only a spot at which the cross angle $\theta_{L-(L+1)}$ between the outermost layer steel filaments in the hose radial direction outer side of the steel cord in the $L^{th}$ reinforced layer of the second or later layer and the outermost layer steel filaments in the hose radial direction inner side of the steel cord in the $(L + 1)^{th}$ layer is greater prevents the diameter of the high pressure hose from being increased, and enables shock durability to be improved while improving reinforcement efficiency.

Thus, in the high pressure hose 10 of the present invention, it is preferable that assuming that G1 is a gap between the steel cord in the $L^{th}$ ($L \geq 2$) steel cord reinforced layer and the steel cord in the $(L + 1)^{th}$ steel cord reinforced layer, in which $\theta_{L-(L+1)} \geq 76°$ is satisfied, and G2 is a gap between a steel cord in the $P^{th}$ ($P \geq 1$, and L and P are different) steel cord reinforced layer and a steel cord in the $(P + 1)^{th}$ steel cord reinforced layer, in which $\theta_{P-(P+1)} < 72°$ is satisfied, a relationship represented by the following Formula (3):

$$G1 > G2 \times 1.5 \quad (3)$$

is satisfied, and more preferably

$$G1 > G2 \times 3.0 \quad (6)$$

is satisfied. From the viewpoint of the durability of the high pressure hose, G1 is preferably 0.1 to 1.0 mm, and more preferably 0.2 to 0.6 mm. In addition, G2 is preferably 0.04 to 0.6 mm, and more preferably 0.1 to 0.4 mm. Examples of a method of widening a gap between steel cords include a method of adjusting the thickness of an intermediate rubber layer arranged between the $N^{th}$ reinforced layer 11 and the $(N + 1)^{th}$ reinforced layer 11.

In addition, in the high pressure hose 10 of the present invention, the twisting angle of steel filaments with respect to the central axis of a steel cord is preferably 2.6° to 15.0°. When the twisting angle of the steel filaments is less than 2.6°, a twisting pitch becomes long, the steel cord is prone to be unwound in the production of the high pressure hose, and forming workability is deteriorated. In contrast, a twisting angle of more than 15.0° may result in the insufficient strength of the obtained high pressure hose. Preferred is 3.2° to 9°, more preferred is 3° to 8°, and particularly preferred is 3.5° to 7°.

In the high pressure hose 10 of the present invention, it is important that the cross angle $\theta_{1-2}$ between the first reinforced layer 11a and the second reinforced layer 11b satisfies a predetermined relationship, and other specific structures, materials, and the like are not particularly limited.

For example, such a steel cord used in the reinforced layers 11 may have a single-twisted or layer-twisted structure. In addition, a known steel filament can be used as such a steel filament included in the steel cords, and the filament diameter of the steel filament is preferably 0.12 to 0.40 mm. Further, the angle of winding such a steel cord in the reinforced layers 11 is preferably 50 to 60°. A filament diameter of less than 0.12 mm results in the deterioration of steel filament drawing productivity, while a filament diameter of more than 0.40 mm precludes the obtainment of a cost per cross-sectional area and results in the increase of flexural rigidity proportional to the fourth power of a diameter. In addition, a steel cord winding angle of less than 50° results in an increased change in the diameter of the hose when pressure is applied to the hose, while a steel cord winding angle of more than 60° results in an increased change in the length of the hose when pressure is applied to the hose. When the steel filaments are twisted, a bend having a helical shape, a polygonal shape, a wave shape, or the like may be created in all or some of the steel filaments included in the code. Examples of the creation of a bend having a polygonal shape can include such creation of a bend as described in International Publication No. WO 1995/016816A.

In addition, rubber used in the high pressure hose 10 is not particularly limited either, and the material of the inner rubber layer 13 can be selected based on the physical and chemical properties, and the like of a substance transported into the high pressure hose 10, as appropriate. Specific examples thereof include ethylene-propylene copolymer rubber (EPM), ethylene-propylene-diene ternary copolymer rubber (EPDM), acrylic rubber (ACM), ethylene acrylate rubber (AEM), chloroprene rubber (CR), chlorosulfonated polyethylene rubber, hydrin rubber, styrene-butadiene copolymer rubber (SBR), acrylonitrile-butadiene copolymer rubber (NBR), isobutylene-isoprene copolymer rubber (butyl rubber, IIR), natural rubber (NR), isoprene rubber (IR), butadiene rubber (BR), urethane-based rubber, silicone-based rubber, fluorine-based rubber, ethylene-vinyl acetate copolymer (EVA), and hydrogenated NBR. These rubber components may be used singly or in an optional blend of two or more.

Among the rubber components described above, acrylic rubber (ACM), ethylene acrylate rubber (AEM), chloroprene rubber (CR), chlorosulfonated polyethylene rubber, hydrin rubber, acrylonitrile-butadiene copolymer rubber (NBR), hydrogenated NBR, silicone-based rubber, and fluorine-based rubber are preferred from the viewpoint of oil resistance.

In addition, a known rubber compounding agent or a filler for rubber, commonly used in the rubber industry, can be used in a rubber composition for the inner rubber layer 13 in consideration of material strength, durability, extrusion formability, and the like. Examples of such compounding agents and fillers include: inorganic fillers such as carbon black, silica, calcium carbonate, talc, and clay; plasticizers, softening agents; vulcanizing agents such as sulfur and peroxide; vulcanization aids such as zinc oxide and stearic acid; vulcanization accelerators such as dibenzothiazyl disulfide, N-cyclohexyl-2-benzothiazyl-sulfenamide, and N-oxydiethylene-benzothiazyl-sulfenamide; and additives such as antioxidants and antiozonants. These compounding agents and fillers may be used singly or in combination of two or more.

The thickness of the inner rubber layer 13 also varies according to the kind of a material included in the inner rubber layer 13, but is in a range of 1 to 10 mm, and preferably in a range of 1 to 6 mm. In addition, the inner diameter of the high pressure hose is selected depending on a purpose, and is commonly preferably in a range of 3 mm to 200 mm.

In addition, the outer rubber layer 14 may include, for example, a thermoplastic resin or the like similarly in the case of conventional high pressure hoses, and may include various rubbers similar to those of the inner rubber layer 13. The disposition of the outer rubber layer 14 enables the steel cords included in the reinforced layers 11 to be protected to prevent the reinforced layers 11 from being damaged, and also allows appearance to be preferred. The wall thickness of the outer rubber layer 14 is commonly in a range of 1 mm to 20 mm.

Further, the intermediate rubber layers 12 can be formed of various rubbers similar to those of the inner rubber layer 13.

The high pressure hose of the present invention can be manufactured according to a usual method, and is particularly useful as a high pressure hose used for transporting various high pressure fluids, or as a high pressure hose used for pressure-feeding hydraulic oil for an oil pressure pump to an actuating part.

EXAMPLES

The present invention will be described in more detail below with reference to Examples.

<Examples 1 to 8, and Comparative Examples 1 and 2>

Steel filaments having a filament diameter of 0.3 mm were twisted at each of twisting angles set forth in the following Tables 1 and 2 to produce a steel cord having a (1 × 3) structure. The obtained steel cord was used as a reinforcing material for a reinforced layer, to produce a high pressure hose having a structure illustrated in FIG. 1. With regard to the direction of winding the steel cord, the first layer was Z-wound, the second layer was S-wound, the third layer was Z-wound, and the fourth layer was S-wound, and a winding angle was set at 54.7°. In addition, intermediate rubber layers were arranged so that such steel cord gaps as set forth in the tables were achieved.

<Shock Durability>

A shock pressure test in conformity with JIS K 6330-8 was conducted, and the number of times of the compression test conducted until each high pressure hose was ruptured was recorded. The number of times of the pressure test for each high pressure hose is set forth in Tables 1 and 2.

[Table 1]

|  |  | Example 1 | Example 2 | Example 3 | Example 4 | Example 5 |
|---|---|---|---|---|---|---|
| Twisting Angle (°) | | 2.6 | 3.2 | 3.9 | 3.9 | 3.9 |
| Cross Angle (°) | $\theta_{1-2}$ | 75.8 | 64.2 | 70.6 | 62.8 | 62.8 |
| | $\theta_{2-3}$ | 65.4 | 77.0 | 70.6 | 78.4 | 70.6 |
| | $\theta_{3-4}$ | 75.8 | 64.2 | 70.6 | 62.8 | 70.6 |
| Steel Cord Gap (mm)* | Between First to Second Layers | 0.15 | 0.15 | 0.15 | 0.15 | 0.15 |
| | Between Second to Third Layers | 0.15 | 0.15 | 0.15 | 0.15 | 0.15 |
| | Between Third to Fourth Layers | 0.15 | 0.15 | 0.15 | 015 | 0.15 |
| G1/G2 | | 1 | 1 | 1 | 1 | 1 |
| Shock Durability (100000 Times) | | 8 | 9 | 15 | 10 | ≥20 |
| *Gap between steel cord in Nth steel cord reinforced layer and steel cord in (N + 1)th steel cord reinforced layer | | | | | | |

7

[Table 2]

| | | Example 6 | Example 7 | Example 8 | Comparative Example 1 | Comparative Example 2 |
|---|---|---|---|---|---|---|
| Twisting Angle (°) | | 8.8 | 3.9 | 3.9 | 3.9 | 8.8 |
| Cross Angle (°) | $\theta_{1-2}$ | 53 | 62.8 | 62.8 | 78.4 | 88.2 |
| | $\theta_{2-3}$ | 70.6 | 78.4 | 78.4 | 62.8 | 53 |
| | $\theta_{3-4}$ | 70.6 | 62.8 | 62.8 | 78.4 | 88.2 |
| Steel Cord Gap (mm)* | Between First to Second Layers | 0.15 | 0.15 | 0.15 | 0.15 | 0.15 |
| | Between Second to Third Layers | 0.15 | 0.25 | 0.20 | 0.15 | 0.15 |
| | Between Third to Fourth Layers | 0.15 | 0.15 | 0.15 | 0.15 | 0.15 |
| G1/G2 | | 1 | 1.67 | 1.33 | 1 | 1 |
| Shock Durability (100000 Times) | | $\geq$20 | 12 | 11 | 7 | 6 |

Tables 1 and 2 reveal that the high pressure hose of the present invention is excellent in shock durability.

DESCRIPTION OF SYMBOLS

10          High pressure hose

11          Steel cord reinforced layer (reinforced layer)

12          Intermediate rubber layer

13          Inner rubber layer

14          Outer rubber layer

20, 120    Steel cord

**Claims**

1.  A high pressure hose comprising a structure formed by layering a plurality of steel cord reinforced layers formed by spirally winding a steel cord formed by twisting a plurality of steel filaments,
    wherein assuming that
    a direction of winding a steel cord in an $N^{th}$ ($N \geq 1$) steel cord reinforced layer and a direction of winding a steel cord in an $(N + 1)^{th}$ steel cord reinforced layer are different from each other, and
    a cross angle $\theta_{N-(N+1)}$ is an angle between an outermost layer steel filament in a hose radial direction outer side of the steel cord in the $N^{th}$ steel cord reinforced layer and an outermost layer steel filament in a hose radial direction inner side of the steel cord in the $(N + 1)^{th}$ steel cord reinforced layer,
    a cross angle $\theta_{1-2}$ between a first steel cord reinforced layer and a second steel cord reinforced layer satisfies a relationship represented by the following Formula (1):

$$\theta_{1-2} < 76° \qquad (1).$$

2.  The high pressure hose according to claim 1, wherein a cross angle $\theta_{M-(M+1)}$ where N = M ($M \geq 2$) in the cross angle

$\theta_{N-(N+1)}$ satisfies a relationship represented by the following Formula (2):

$$\theta_{M-(M+1)} < 76° \quad (2).$$

3. The high pressure hose according to claim 1, wherein assuming that

G1 is a gap between a steel cord in an L$^{th}$ steel cord reinforced layer and a steel cord in an (L + 1)$^{th}$ steel cord reinforced layer, in which a cross angle $\theta_{L-(L+1)}$ where N = L (L ≥ 2) in the cross angle $\theta_{N-(N+1)}$ satisfies $\theta_{L-(L+1)}$ ≥ 76°, and

G2 is a gap between a steel cord in a P$^{th}$ steel cord reinforced layer and a steel cord in a (P + 1)$^{th}$ steel cord reinforced layer, in which a cross angle $\theta_{P-(P+1)}$ where N = P (P ≥ 1, and L and P are different) in the cross angle $\theta_{N-(N+1)}$ satisfies $\theta_{P-(P+1)}$ < 72°,

a relationship represented by the following Formula (3):

$$G1 > G2 \times 1.5 \quad (3)$$

is satisfied.

4. The high pressure hose according to any one of claims 1 to 3, wherein the cross angle $\theta_{1-2}$ satisfies a relationship represented by the following Formula (4):

$$\theta_{1-2} < 64° \quad (4).$$

5. The high pressure hose according to any one of claims 1 to 4, wherein a twisting angle of the steel filaments with respect to a central axis of the steel cord is 2.6° to 15°.

9

FIG. 1

AXIAL DIRECTION OF HOSE

FIG. 2

FIG. 3

## INTERNATIONAL SEARCH REPORT

| International application No. |
|---|
| PCT/JP2018/008433 |

A.   CLASSIFICATION OF SUBJECT MATTER
Int.Cl.  F16L11/08(2006.01)i, B32B1/08(2006.01)i

According to International Patent Classification (IPC) or to both national classification and IPC

B.   FIELDS SEARCHED

Minimum documentation searched (classification system followed by classification symbols)
Int.Cl.  F16L11/08, B32B1/08

Documentation searched other than minimum documentation to the extent that such documents are included in the fields searched
      Published examined utility model applications of Japan       1922-1996
      Published unexamined utility model applications of Japan       1971-2018
      Registered utility model specifications of Japan       1996-2018
      Published registered utility model applications of Japan       1994-2018

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
|---|---|---|
| Y | JP 2012-36927 A (YOKOHAMA RUBBER CO., LTD.) 23 February 2012, claim 1, paragraphs [0013]-[0024], fig. 3, 4 (Family: none) | 1-5 |
| Y | JP 5-272678 A (YOKOHAMA RUBBER CO., LTD.) 19 October 1993, paragraphs [0016]-[0019], fig. 2 & US 5244016 A1, column 4, line 15 to column 5, line 2, fig. 2 & EP 553686 A2 | 1-5 |

☒   Further documents are listed in the continuation of Box C.          ☐   See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 12.04.2018 | 24.04.2018 |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

| International application No. |
|---|
| PCT/JP2018/008433 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2007-162818 A (TOYO TIRE AND RUBBER CO.) 28 June 2007, claim 4, paragraph [0038] (Family: none) | 1-5 |
| A | US 2005/0241716 A1 (NAGY et al.) 03 November 2005, paragraphs [0050]-[0078] & GB 2412953 A | 1-5 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 1995016816 A